# EUROPÄISCHE PATENTSCHRIFT

(11) **EP 2 994 255 B1**
(45) Veröffentlichungstag und Bekanntmachung des Hinweises auf die Patenterteilung: **20.03.2019**
(21) Anmeldenummer: 14720592.6
(22) Anmeldetag: 29.04.2014
(51) Int. Cl.: B21H 3/10, B23B 51/02, E21B 10/44

(54) **WENDELBOHRER UND HERSTELLUNGSVERFAHREN**
TWIST DRILL AND METHOD OF MANUFACTURING
FORET HÉLICOÏDAL ET SON PROCÉDÉ DE FABRICATION

(30) Priorität: 06.05.2013 EP 13166671
(43) Veröffentlichungstag der Anmeldung: 16.03.2016
(73) Patentinhaber: Hilti Aktiengesellschaft, 9494 Schaan (LI)
(72) Erfinder: ACHLEITNER, Corinna, 7320 Sargans (CH); DOMANI, Guenter, 88138 Weissensberg (DE); WINKLER, Mark, 6845 Hohenems (AT); PETERS, Carsten, 9468 Sax (CH)
(74) Vertreter: Hilti Aktiengesellschaft Corporate Intellectual Property
(86) Internationale Anmeldenummer: PCT/EP2014/058684
(87) Internationale Veröffentlichungsnummer: WO 2014/180709

(56) Entgegenhaltungen:
- EP-A1- 0 470 354
- EP-A1- 1 621 274
- DE-B3-102011 085 187
- FR-A1- 2 808 462

## Beschreibung

### GEBIET DER ERFINDUNG

Die vorliegende Erfindung betrifft einen Wendelbohrer und ein Herstellungsverfahren für einen Wendelbohrer, insbesondere für Wendelbohrer für die bohrmeißelnde Bearbeitung von Gestein und Beton nebst Armierungen.

Bohrer für die Bearbeitung von Gestein, armierten Beton etc. sind beispielsweise aus der gattungsgemäßen US 7,021,872 bekannt. Die Wendel soll primär Bohrgut aus einem Bohrloch abtransportieren. Die klassischen helixförmigen Wendeln haben sich hierfür bewährt, nicht nur wegen des gesicherten Bohrguttransports sondern auch wegen des moderaten Herstellungsaufwands. Die klassische Wendel unterliegt jedoch, insbesondere wegen der verwendeten Herstellungsverfahren, Kompromissen in anderen Eigenschaften. Ein Aspekt ist die Reibung der Wendel an der Bohrlochwand.

EP 0 470 354 A1 beschreibt einen Bohrer mit zwei oder mehreren hintereinander angeordneten balligen Schaftverbreiterungen. Zwischen den Bohrmehlnuten sind breite Stege vorgesehen, welche eine gute Anlagefläche im Bereich der Scheitelpunkt der Schaftverbreiterung bieten.

### OFFENBARUNG DER ERFINDUNG

Der erfindungsgemäße Wendelbohrer hat einen Bohrkopf, eine durchgehende zwei, drei- bis sechsgängigen Wendel und ein Einsteckende, welche aufeinanderfolgend auf einer Bohrerachse angeordnet sind. Die Wendel weist eine sich periodisch, zwei, drei- bis sechsmal pro Umlauf um die Bohrerachse variierende radiale Außenabmessung auf. Die Außenabmessung variiert vorzugsweise um maximal 10 %, und vorzugsweise um mindestens 2 %.

Der Wendelbohrer hat eine durchgehende Wendel, die entlang ihres gesamten Umlaufs zum Abtransport des Bohrguts beiträgt. Der variierende Durchmesser der Wendel führt dazu, dass die Wendel nur an wenigen Punkten an der Bohrlochwand anliegt. Hierdurch kann die Reibung verringert werden.

Das erfindungsgemäße Herstellungsverfahren für einen Wendelbohrer hat folgende Schritte. Eine Mehrzahl von Vertiefungen wird in die Mantelfläche eines Rohlings zum Ausbilden eines Netzes aus Rippen, eingewalzt. Die zueinander parallelen ersten Rippen verlaufen längs der Achse des Rohlings und die zueinander parallelen zweiten Rippen verlaufen unter einem Neigungswinkel schräg zu den ersten Rippen. Die ersten Rippen haben zwischen benachbarten zweiten Rippen liegende Abschnitte. In diese Abschnitte werden Nuten eingewalzt. An einer Stirnseite des gewalzten Rohlings wird ein Bohrkopf gebildet.

Das zweiphasige Walzverfahren ist ein effizientes Herstellungsverfahren für den Bohrer, welches zugleich eine neue Gestaltungsfreiheit für die Form des Bohrers ermöglicht.

Die Vertiefungen können in zueinander parallelen und längs der Achse orientieren Reihen eingewalzt werden. Die längs der Achse benachbarte Vertiefungen können längs der Achse überlappen. In Umfangsrichtung benachbarte Vertiefungen können in Umfangsrichtung beabstandet sein.

Eine Ausgestaltung sieht vor, dass eine Oberfläche der Vertiefungen entlang jeder Richtung konkav ist. Die Vertiefungen weichen in ihrer Form von der herzustellenden Wendel in Bezug auf die Krümmung stark ab. Es zeigt sich jedoch, dass für die Herstellung einer gewünschten Wendel die konkaven Vertiefungen ausreichend sind. Vorteilhafterweise stellen die Vertiefungen geringere Anforderungen an die Walzwerkzeuge als für ein unmittelbares Einwalzen einer Nut in der Form der Wendel.

Eine Ausgestaltung sieht vor, dass die Nuten parallel zu den zweiten Rippen verlaufen. Eine Oberfläche der Nuten kann in einer Richtung parallel zu den zweiten Rippen konvex sein. Die Nuten überwalzen die Vertiefungen. Die Nuten stimmen mit dem konvexen Verlauf des Wendelbodens einer klassischen Wendel überein.

Die Nuten werden mit einer um weniger als 10 % von einer Tiefe der Vertiefungen abweichenden Tiefe eingewalzt. Eine Abmessung der Nuten längs der Achse ist gleich oder um bis zu 20% geringer als eine Abmessung der Vertiefungen längs der Achse.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Wendelbohrer
- Fig. 2: einen Querschnitt II-II durch die Wendel des Wendelbohrers
- Fig. 3: einen Querschnitt III-III durch die Wendel des Wendelbohrers
- Fig. 4: einen Schnitt entlang dem helixförmigen Wendelboden
- Fig. 5: einen Schnitt durch ein erstes Walzgerüst
- Fig. 6: einen Schnitt VI-VI durch den Halbling mit Blick auf das erste Walzgerüst,
- Fig. 7: einen Querschnitt VII-VII durch den Halbling
- Fig. 8: eine erste Seitenansicht des Halblings, Blickrichtung VIII
- Fig. 9: eine zweite Seitenansicht des Halblings, Blickrichtung IX
- Fig. 10: eine abgerollte Oberfläche des Halblings

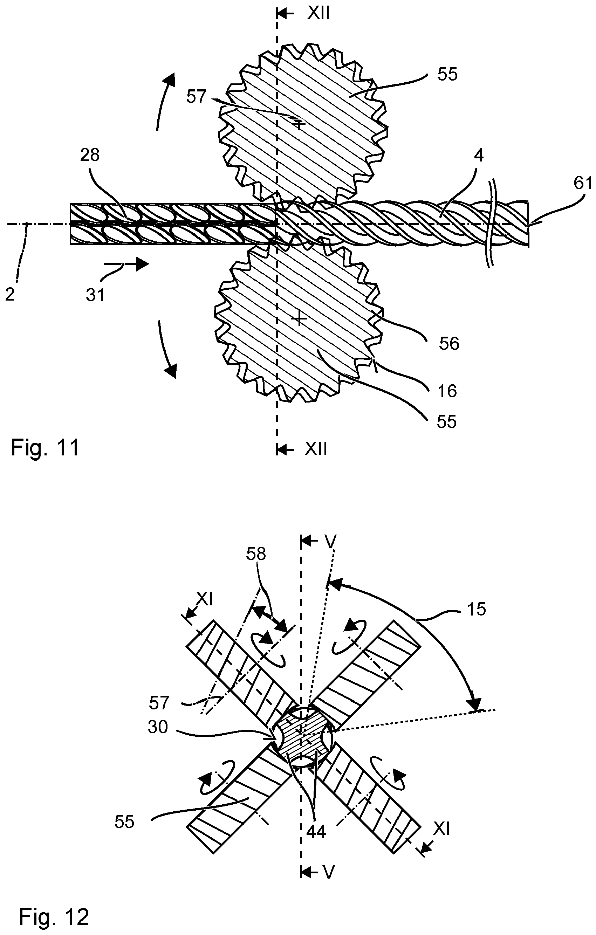

- Fig. 11: einen Schnitt durch ein zweites Walzgerüst,
- Fig. 12: einen Schnitt XII-XII durch das zweite Walzgerüst,
- Fig. 13: eine abgerollte Oberfläche des Halblings nach dem zweiten Walzgerüst.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

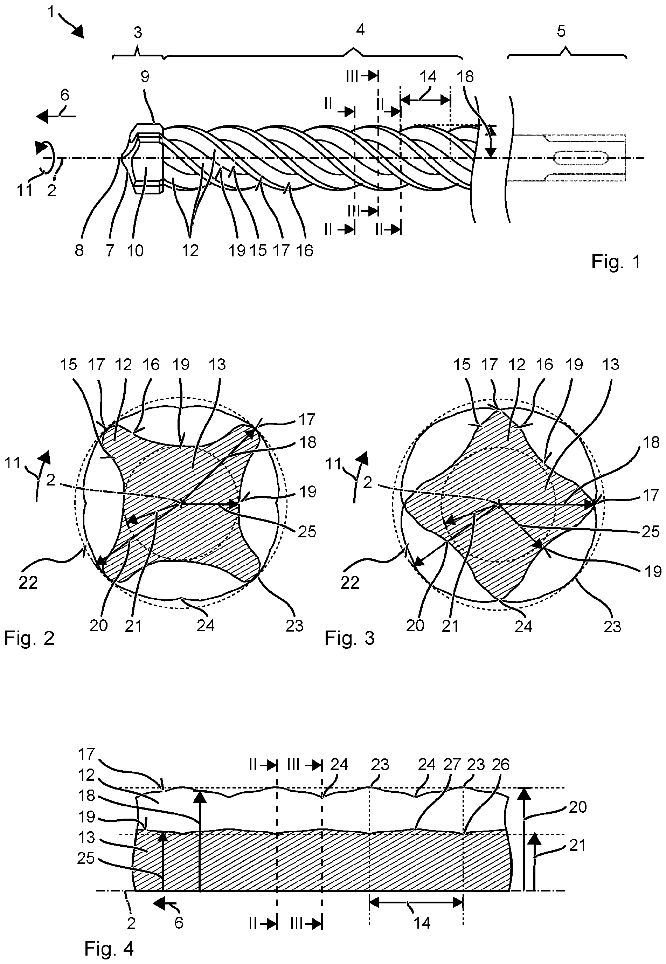

Fig. 1 zeigt schematisch vereinfacht einen beispielhaften Wendelbohrer **1.** Der Wendelbohrer **1** hat längs einer Bohrerachse **2** aufeinanderfolgend einen Bohrkopf **3,** eine spiralförmige Wendel **4** und ein Einsteckende **5.**

Der dargestellte Wendelbohrer **1** ist für die Bearbeitung von armierten Gestein ausgelegt, insbesondere für eine der Drehbewegung überlagerte Meißeltätigkeit. Der Bohrkopf **3** hat vier in Schlagrichtung **6** weisende Meißelkanten **7.** Die Meißelkanten **7** sind jeweils als Kreuzungslinie einer im Drehsinn des Bohrers **1** vorauslaufenden Fläche und einer nachlaufenden Fläche gebildet, die beide gegenüber der Bohrerachse **2** geneigt und zueinander um wenigstens 60 Grad geneigt sind. Die Meißelkanten **7** verlaufen im Wesentlichen in radialer Richtung, z.B. ausgehend von einer Spitze **8** des Bohrkopfs **3** bis zu einem Rand des Bohrkopfs **3,** wo die Meißelkanten **7** vorzugsweise gegenüber der Spitze **8** in Schlagrichtung **6** zurückgesetzt sind. Eine Neigung der Meißelkanten **7** gegenüber der Achse **3** kann in radialer Richtung konstant sein oder im Bereich der Spitze **8** geringer als am Rand sein. Insbesondere kann die Meißelkante **7** am Rand senkrecht zu der Bohrerachse **2** verlaufen. An die in Schlagrichtung **6** weisenden Meißelkanten **7** schließt sich am Rand des Bohrkopfs **3** eine Abbruchkante **9** an, welche parallel zu der der Achse **3** verläuft. Die Abbruchkante **9** steht vorzugsweise radial über die Wendel **4** hinaus. Der Bohrkopf **3** ist an seinem Umfang mit parallel zur Bohrerachse **2** verlaufenden Abfuhrrinnen **10** versehen, entlang welchen das Bohrmehl aus dem Bohrloch transportiert werden kann. Die Abfuhrrinnen **10** sind in Umfangsrichtung **11** zwischen den Meißelkanten **7** angeordnet. Der Bohrkopf **3** ist vorzugsweise ein zusammenhängender Körper aus gesintertem Hartmetall, das z.B. Wolframkarbid und einen metallischen Binder enthält. Der dargestellte Bohrkopf **3** hat zwei Paare unterschiedlich ausgebildeter Meißelkanten, von den die die Spitze **8** bildenden Meißelkanten als Hauptschneiden und das andere Paar als Nebenschneiden bezeichnet werden. Anstelle von vier kann der Meißelkörper auch zwei, z.B. nur die Hauptschneiden, oder drei oder mehr als vier Meißelkanten aufweisen.

Die Wendel **4** hat mehrere helixförmige Wendelstege **12,** die um einen rotationssymmetrischen Kern **13** angeordnet sind. Die Zahl der Wendelstege **12** ist vorzugsweise gleich der Zahl der Meißelkanten **7.** Die beispielhafte Wendel **4** hat vier Wendelstege **12,** d.h. ist viergängig. Die Wendelstege **12** sind beispielsweise in Umfangsrichtung **11** in gleichen Winkelabständen angeordnet, z.B. im Abstand von 90 Grad. Der axiale Abstand **14** zwischen benachbarten Wendelstegen **12** ist vorzugsweise gleich groß und längs der Bohrerachse **2** konstant. Der axiale Abstand **14** ist in dem Beispiel ein Viertel der Ganghöhe eines Wendelstegs **12.**

Die Wendelstege **12** haben vorzugsweise die gleichen Abmessungen und die gleiche Form. Die Oberfläche des Wendelstegs **12** hat zwei sich helixförmig um die Bohrerachse **2** windende Flanken **15, 16.** Die erste der Flanken **15** ist durchgängig dem Bohrkopf **3** zugewandt, die zweite der Flanken **16** ist durchgängig von dem Bohrkopf **3** abgewandt. Der radiale Abstand der ersten Flanke **15** zu der Bohrerachse **2** steigt in einer Umfangsrichtung **11** im Wesentlichen monoton an, der radiale Abstand der zweiten Flanke **16** fällt in der Umfangsrichtung **11** im Wesentlichen monoton ab. Den Übergang zwischen der ersten Flanke **15** und der zweiten Flanke **16,** also deren radial vorstehenden Kanten, bildet der Wendelrücken **17.** Der Wendelrücken **17** kann ein im wesentlichen senkrecht zu der Bohrerachse **2** orientiertes, helixförmiges Band oder geometrisch vereinfacht eine durchgehende, um die Bohrerachse **2** gewundene Linie sein. Die längs der Bohrerachse **2** ununterbrochene Linie beinhaltet aus jedem aller senkrecht zu der Bohrerachse **2** orientierten Querschnitte durch den Wendelsteg **12** den Punkt, welcher den größten Abstand **18** zu der Bohrerachse **2** hat. Der Abstand **18** wird nachfolgend als Höhe **18** des Wendelrückens **17** bezeichnet.

Ein helixförmiger Wendelboden **19** verläuft jeweils zwischen zwei benachbarten Wendelstegen **12.** Der Wendelboden **19** kann eine durchgehende helixförmige Linie oder ein im wesentlichen senkrecht zu der Bohrerachse **2** orientiertes Band sein. Der Wendelboden **19** hat den geringsten radialen Abstand zu der Bohrerachse **2.** Der Kern **13** liegt an dem Wendelboden **19** frei.

Eine klassische Wendel hat eine längs der Achse gleichbleibende Form und Abmessung des Querschnitts. Der Querschnitt in einer Ebene lässt sich deckungsgleich auf alle Querschnitte in parallelen Ebenen allein durch eine Drehung um die Bohrerachse abbilden. Insbesondere ist die Höhe des Wendelrückens konstant.

Die Form des Querschnitts der Wendel **4** des Wendelbohrers **1** ändert sich periodisch längs der Bohrerachse **2.** Die Form wiederholt sich vorzugsweise mit dem axialen Abstand **14** der benachbarten Wendelgänge **12,** d.h. die Periodizität ist vorzugsweise gleich dem Inversen des axialen Abstands **14.** Fig. 2 zeigt einen ersten Querschnitt in der Ebene II-II senkrecht zu der Bohrerachse **2,** Fig. 3 zeigt einen zweiten Querschnitt in der Ebene III-III parallel zu der Ebene II-II. Der Versatz zwischen den beiden Ebenen II-II, III-III entspricht der halben Periode, d.h. der Hälfte des axialen Abstands **14** zwischen zwei benachbarten Wendelgängen **12.** Wie aus den Fig. 2 und Fig. 3 ersichtlich, sind die Querschnitte in den Ebenen II-II, III-III nicht durch eine Drehung deckungsgleich aufeinander abbildbar, was nachfolgend als verschiedene Form bezeichnet wird. Sämtliche Querschnitte innerhalb einer halben Periode haben eine verschiedene Form.

Die Wendel **4** ist in einen Zylinder mit einem konstanten Außenradius **20** eingeschrieben. Zudem kann in die Wendel **4** ein voller Zylinder (Kern **13**) mit einem konstanten Innenradius **21** eingeschrieben werden. Die Zylinder sind gestrichelt in den Fig. 2 bis Fig. 4 eingezeichnet. Die radiale Außenabmessung **18** der Wendel **4** ändert sich periodisch längs der Bohrerachse **2.** Die radiale Außenabmessung **18** ist in der Ebene II-II größer als in der Ebene III-III. Entsprechend liegt die Wendel **4** nur punktuell an dem umschreibenden Zylinder an. Die radiale Außenabmessung **18** variiert vorzugsweise um bis zu 10 %, vorzugsweise um wenigstens 2 %. Die Variation der Amplitude ist in Hinblick auf einen kontinuierlichen Transport von Bohrgut begrenzt. Eine geringfügige Variation, z.B. durch eine Riffelung des Wendelrückens **17,** hingegen wird durch das feinkörnige Bohrgut verklebt und kann nachteiligerweise zu einer erhöhten Reibung zwischen dem anklebenden Bohrgut und der Bohrwand führen. Die radiale Außenabmessung **18** variiert langsam, z.B. dreimal bis sechsmal pro vollständigen Umlauf eines Wendelrückens **17,** hier beispielsweise viermal. Das Profil **22** der Wendel **4,** definiert durch die variierenden Außenabmessung **18,** hat eine entsprechende dreizählige bis sechzählige Drehsymmetrie.

Fig. 4 zeigt einen Ausschnitt des Wendelrückens **17** in einer um die Bohrerachse **2** abgerollten Darstellung. Der Schnitt IV-IV ist helixförmig und folgt dem Wendelboden **19** (Abszisse und Ordinate sind nicht maßstabsgerecht). Der Wendelrücken **17** hat eine sich längs der Bohrerachse **2** periodisch variierende Höhe **18.** Die in den jeweiligen zu der Bohrerachse **2** senkrechten Querschnitten am weitesten von der Bohrerachse **2** entfernten Punkte (Wendelrücken **17**) haben einen unterschiedlichen Abstand (Höhe **18**) zu der Bohrerachse **2.** Die Höhe **18** hat längs der Bohrerachse **2** in konstanten Abständen **14** periodisch aufeinanderfolgende Maxima, nachfolgend als Gipfel **23** bezeichnet, und zwischen den Gipfeln **23** liegende Minima, nachfolgend als Sattel **24** bezeichnet. Die Höhe **18** variiert zwischen dem Gipfel **23,** also dem Maximalwert, und dem Sattel **24,** dem Minimalwert, um bis zu 10 %, vorzugsweise um wenigstens 3 %. Die Wendel **4** liegt beim Bohren nur mit den Gipfeln **23** an der Bohrlochwand an. Hierdurch können Reibungsverluste, insbesondere bei tiefen Bohrlöchern, verringert werden.

Der Wendelrücken **17** hat vorzugsweise gleichviele Gipfel **23** je Umlauf um die Bohrerachse **2** wie die Wendel **4** Wendelstege **12** aufweist. Ein axialer Abstand benachbarter Gipfel **23** ist vorzugsweise gleich dem axialen Abstand **14** benachbarter Wendelrücken **17.** Ein Abstand zweier Gipfel **23** eines Wendelrückens **17** in Umfangsrichtung **11** ist gleich der Unterteilung des Umfangs durch die mehreren Wendelstege **12,** bei dem dargestellten Beispiel 90 Grad.

Die Wendelstege **12** haben vorzugsweise die gleiche Abmessung, die gleiche Form und ihre Anordnung ist drehsymmetrisch. Dem Gipfel **23** eines Wendelrückens **17** liegt in Umfangsrichtung **11** der Gipfel **23** des benachbarten Wendelrückens **17** gegenüber. Der Gipfel **23** eines Wendelrückens **17** liegt damit vorzugsweise mit jeweils einem Gipfel **23** jeder der anderen Wendelrücken **17** in einer Ebene II-II senkrecht zu der Bohrerachse **2.** Bei dem in Fig. 2 dargestellten Beispiel hat in der Ebene II-II jede der vier Wendel **4** einen Gipfel **23.** Ferner kann vorzugsweise dem Gipfel **23** eines Wendelrückens **17** in axialer Richtung der Gipfel **23** des benachbarten Wendelrückens **17** gegenüberliegen. Jeder Gipfel **23** liegt auf einer von hier vier Geraden, die parallel zu der Bohrerachse **2** verlaufen und in gleichen Winkelabständen, hier 90 Grad, um die Bohrerachse **2** angeordnet sind. Die Zahl der Geraden entspricht der Zahl der Wendelstege **12.**

Die Sattel **24,** d.h. die Minima der Höhe **18,** liegen etwa auf halber Distanz zwischen zwei aufeinanderfolgenden Gipfeln **23.**

Der Wendelboden **19** kann einen längs der Bohrerachse **2** konstanten radialen Abstand **25** aufweisen. Bei der beispielhaften Ausführungsform ergibt sich eine geringe periodische Variation des Wendelbodens **19** längs der Bohrerachse **2.** Die Minima **26** des radialen Abstands **25** des Wendelbodens **19** liegen vorzugsweise mit den Gipfeln **23** des Wendelrückens in zu der Bohrerachse **2** senkrechten Ebenen II-II. Die Maxima **27** des radialen Abstands **25** des Wendelbodens **19** liegen vorzugsweise mit den Satteln **24** des Wendelrückens in zu der Bohrerachse **2** senkrechten Ebenen III-III. Der Wendelboden **19** und der Wendelrücken **17** weisen somit eine gegenläufige Neigung zu der Bohrerachse **2** auf.

Das nachfolgend beschriebene Herstellungsverfahren für den Wendelbohrer **1** befasst sich hauptsächlich mit der Herstellung der Wendel **4.** Die beschriebene Fertigung des Einsteckendes **5** und die Herstellung oder das Anbringen des Bohrkopfs **3** sind nur bevorzugte Beispiele.

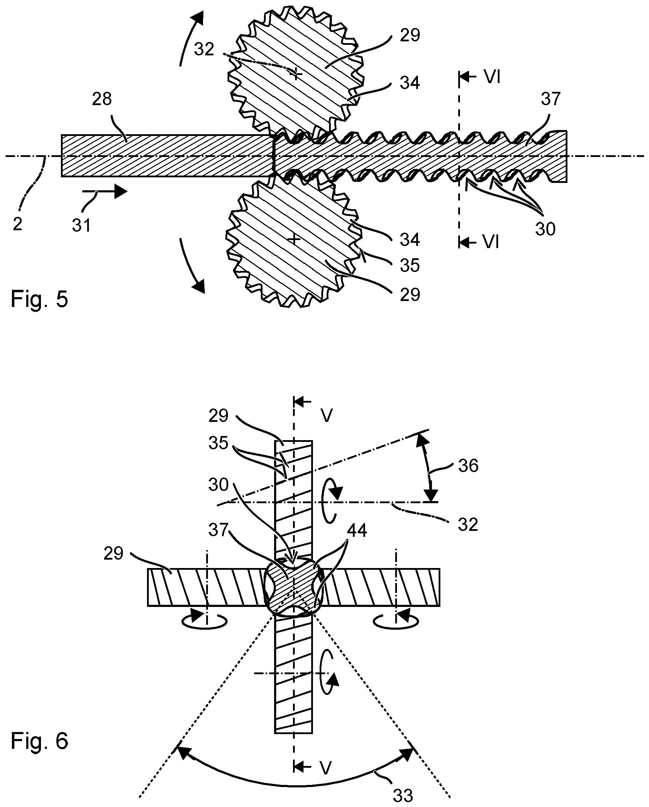

Fig. 5 und 6 zeigen schematisch eine erste Bearbeitung eines Rohlings **28** in Längsschnitt V-V bzw. Querschnitt VI-VI. Der Rohling **28** ist beispielsweise ein zylindrischer Draht. Der Querschnitt des Rohlings **28** ist zwecks einfacherer Beschaffung vorzugsweise kreisförmig, kann jedoch auch eine andere näherungsweise kreisförmige Gestalt, z.B. polygonal, oval aufweisen.

Das dargestellte Herstellungsverfahren längt den Rohling **28** vor den nachfolgenden Umformungsschritten auf eine gewünschte Länge, z.B. die Länge der Wendel **4** oder die Länge des Wendelbohrers **1** einschließlich des Einsteckendes **5.** Bei einer bevorzugten Variante wird die Wendel **4** zuerst in den Rohling **28** eingeformt und der umgeformte Rohling nachfolgend in mehrere Wendeln **4** zerschnitten.

Der Rohling **28** wird durch ein erstes Gerüst mit vier Walzwerkzeugen **29** mit einer Vielzahl von Vertiefungen **30** versehen. Das Walzen der Vertiefungen **30** erfolgt durch Längswalzen. Eine Vortriebsrichtung **31** des Rohlings **28** ist parallel zu dessen Achse **2.** Die Walzwerkzeuge **29** rollen an dem Rohling **28** parallel zu der Achse **2** des Rohlings **28** ab. Eine Drehachse **32** oder Schwenkachse der Walzwerkzeuge **29** ist senkrecht zu der Achse **2** und der Vortriebsrichtung **31** des Rohlings **28.**

Die Walzwerkzeuge **29** sind vorzugsweise gleich ausgebildet. Ferner sind die Walzwerkzeuge **29** in gleichen Winkelabständen um die Achse **2** des Rohlings **28** angeordnet. Jedes der Walzwerkzeuge **29** bearbeitet somit einen anderen Winkelabschnitt **33** des Rohlings **28** und formt in den Winkelabschnitt **33** eine Reihe von längs der Achse **2** aufeinanderfolgenden Vertiefungen **30** ein. Der Abstand längs der Achse **28** benachbarter Vertiefungen **30** ist vorzugsweise konstant.

Das Walzwerkzeug **29** hat im Wesentlichen die Form eines schrägverzahnten Zahnrads mit mehreren auf dem Umfang angeordneten Zähnen **34.** Die Zähne **34** sind beispielsweise prismatisch, d.h. ihr Querschnitt ist längs der Drehachse **32** konstant. beispielhaft dargestellte Querschnitt ist teilkreisförmig, d.h. die Zähne **34** haben die Form eines Zylindersegments. Die Kopflinie **35** der Zähne **34** ist gegenüber der Drehachse **32** geneigt. Ein Neigungswinkel **36** zwischen der Drehachse **32** und der Kopflinie **35** liegt im Bereich zwischen 30 Grad und 60 Grad. Die Zähne **34** sind vorzugsweise alle gleich ausgebildet.

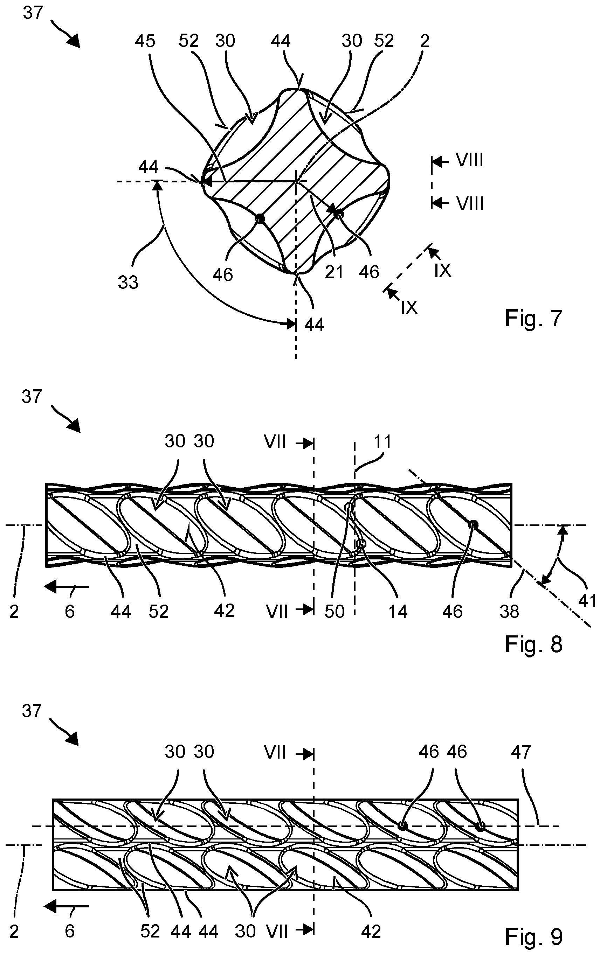

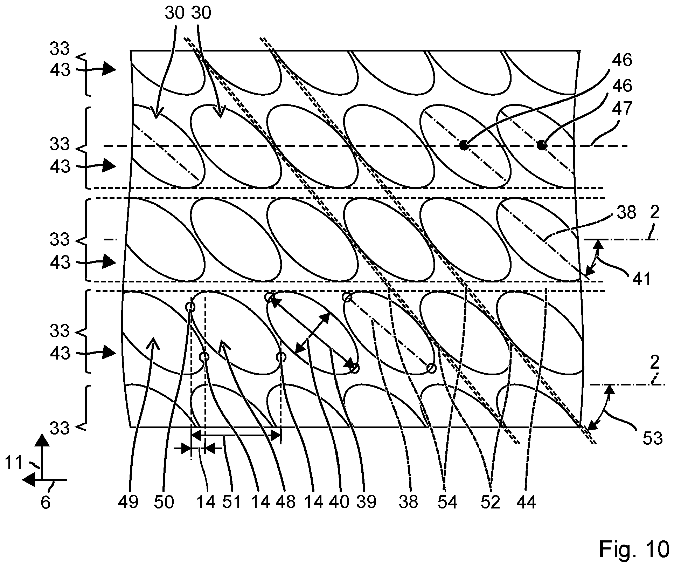

Der mit den Walzwerkzeugen **29** vorzugsweise kalt umgeformte Rohling **28,** nachfolgend Halbling **37,** ist in den Fig. 7, Fig. 8 und Fig. 9 dargestellt. Fig. 7 zeigt vergrößert einen Querschnitt in der Ebene VII-VII, Fig. 8 eine Seitenansicht in Richtung VIII, Fig. 9 ein andere Seitenansicht in Richtung IX und Fig. 10 eine um die Achse **2** abgerollte Darstellung.

Die in den Halbling **37** eingeformten Vertiefungen **30** haben beispielhaft einen elliptischen oder rautenförmigen Umriss. Die Vertiefungen **30** sind gleich gestaltet.

Eine Längsachse **38** der Vertiefung **30** verläuft durch die beiden am weitesten entfernten Enden der Vertiefung **30** und definiert somit deren größte Abmessung **39.** Die Abmessung **39** der Vertiefung **30** längs der Längsachse **38** ist vorzugsweise mehr als doppelt so groß, wie die Abmessung **40** der Vertiefung **30** senkrecht zu der Längsachse **38.** Die Längsachse **38** der Vertiefung **30** ist gegenüber der Achse **2** des Halblings **37** um einen Neigungswinkel **41** geneigt. Der Neigungswinkel **41** liegt vorzugsweise zwischen 30 Grad und 60 Grad.

Die Oberfläche **42** der Vertiefung **30** ist vorzugsweise konkav zylindrisch oder konkav prismatisch. Die Vertiefung **30** hat im Wesentlichen die Form eines Schnitts eines kreisförmigen oder elliptischen Zylinders mit dem zylindrischen Rohling **28.** Die Vertiefung **30** ist parallel zu der Längsachse **38** ungekrümmt und in allen weiteren Richtungen konkav mit einer konstanten oder variierenden, positiven Krümmung. Alternativ kann die Vertiefung **30** linsenförmig ausgeprägt sein. Die Vertiefung **30** ist in jeder Richtung konvex, d.h. positiv gekrümmt, auch längs der Längsachse **38.** Die Krümmung der Oberfläche **42** parallel zu der Längsachse **38** ist größer als die Krümmung der Oberfläche **42** senkrecht zu der Längsachse **38.** Eine negative Krümmung, d.h. eine konkave Linie, der Vertiefung **30** ist in keiner Ausführung erwünscht, auch nicht entlang der am wenigsten stark gekrümmten Längsachse **38.**

Die Vertiefungen **30** sind in beispielhaft vier Reihen **43** angeordnet. Die Reihen **43** sind vorzugsweise parallel zu der Achse **2** orientiert, entsprechend verläuft jede der Reihen **43** in einem anderen Winkelabschnitt **33.** Die in Umfangsrichtung **11** benachbarten Vertiefungen **30** haben somit keinen Überlapp in Umfangsrichtung **11.** Ein Drehen des Rohlings **28** um seine Achse **2** wird hierfür während des Einwalzens der Vertiefungen **30** unterbunden.

Die in Umfangsrichtung **11** benachbarten Reihen **43** sind jeweils durch eine axial verlaufende Rippe **44** voneinander getrennt. Die axial verlaufenden Rippen **44** sind weitgehend parallel zu der Achse **2** und erstrecken sich unterbrechungsfrei vorzugsweise über die gesamte Länge des Rohlings **28,** zumindest entlang des mit den Vertiefungen **30** versehenen Abschnitts des Rohlings **28.** Eine radiale Höhe **45** der Rippen **44,** ihre Außenabmessung bezogen auf die Achse **2** ist stets die größte radiale Abmessung in jedem Querschnitt. Die Außenabmessung des Halblings **37** ist größer als die Außenabmessung des ursprünglichen Rohlings **28.**

Die Vertiefung **30** hat einen tiefsten Punkt **46,** der in geringstem Abstand **21** zu der Achse **2** ist. Der tiefste Punkt **46** liegt bei der vorzugsweise weitgehend symmetrischen Vertiefung **30** in der Mitte. Der Abstand der Oberfläche **42** zu der Achse **2** erhöht sich monoton, vorzugsweise streng monoton, in jeder Richtung mit der Distanz zu dem tiefsten Punkt **46.** Die tiefsten Punkte **46** der Vertiefungen **30** einer Reihe **43** liegen vorzugsweise auf einer zu der Achse **2** parallelen Linie **47.**

Benachbarte Vertiefungen **30** innerhalb einer Reihe **43,** also Vertiefungen **30** die längs der Achse **2** aneinandergrenzen, überlappen längs der Achse **2.** Die ist in Figuren exemplarisch für die vordere Vertiefung **48** auf die in der achsparallelen Richtung **6** die hintere Vertiefung **49** folgt dargestellt. Eine zu der Achse **2** senkrecht verlaufende Ebene **11** schneidet beide Vertiefungen **48, 49.** Das in der Richtung **6** hintere Ende **14** des vorderen Vertiefung **48** liegt in der Richtung **6** hinter der Ebene **11.** Vice versa, liegt das in der Richtung **6** vordere Ende **50** der hinteren Vertiefung **49** in der Richtung **6** vor der Ebene **11.** Bezogen auf die Abmessung **51** der Vertiefung **30** parallel zu der Achse **2** überlappt die Vertiefung **30** um eine Länge **14** zwischen 10 % und 20 % mit der axial benachbarten Vertiefung **30.**

Die benachbarten Vertiefungen **30** innerhalb einer Reihe **43** sind durch zu der Achse **2** geneigte Rippen **52,** nachfolgend schräge Rippen **52** getrennt. Die schrägen Rippen **52** sind zueinander parallel und mit einem Neigungswinkel **53** gegenüber der Achse **2** geneigt. Die schrägen Rippen **52** erstrecken sich durchgehend gleich den axialen Rippen **44** über die gesamte Länge des Rohlings **28,** bzw. den gesamten Bereich mit den Vertiefungen **30.** Die schrägen Rippen **52** stehen über den Querschnitt des ursprünglichen Rohlings **28** hinaus. Das aus den Vertiefungen **30** geschobene Material wird auf die Rippen **44, 52** verteilt. Eine Höhe der schrägen Rippen **52** kann geringer als die Höhe der axialen Rippen **44** sein, insbesondere in dem überlappenden Bereich benachbarter Vertiefungen **30.**

Die axialen Rippen **44** und die schrägen Rippen **52** kreuzen einander in Kreuzungspunkten **54.** Die Rippen **44, 52** bilden eine netzartige Oberflächenstruktur, deren Zwischenräume durch die Vertiefungen **30** ausgebildet sind.

Der mit dem Netz versehen Halbling **37,** wird einem zweiten Gerüst mit vier zweiten Walzwerkzeugen **55** zugeführt. Das zweite Gerüst walzt die Vertiefungen **30** per Längswalzen in durchgehende, dargestellt vier, Wendelnuten **15** um. Die Dreh- oder Schwenkachsen der Walzwerkzeuge **55** sind senkrecht zu der Vorschubrichtung und Achse **2** des Halblings **37.** Die zweiten Walzwerkzeuge **55** sind vorzugsweise gleich und um die Achse **2** vorzugsweise in äquidistanten Winkeln angeordnet.

Jedes der Walzwerkzeuge **55** bearbeitet einen anderen Winkelabschnitt **15** des Halblings **37.** Die in Umfangsrichtung **11** benachbarten Walzwerkzeuge **55** berühren einander vorzugsweise derart, dass die Walzflächen einen geschlossenen Ring um die Achse **2** des Halbling **37** bilden. Ein axialer Abschnitt des Halblings **37** wird von allen Seiten gleichzeitig umgeformt und der axiale Abschnitt verschiebt sich fortlaufend längs der Achse **2.**

Der Halbling **37** wird dem zweiten Gerüst mit einer definierten Winkelorientierung zugeführt. Bei der dargestellten Ausführungsform ist das zweite Gerüst um 45 Grad gegenüber dem ersten Gerüst gedreht. Die axialen Rippen **44** sind jeweils mittig oder etwa mittig zu den Walzflächen. Der von dem zweiten Walzwerkzeug **55** bearbeitete Winkelabschnitt **15** überlappt mit genau zwei benachbarten Reihen **43** der Vertiefungen **30** des Halblings **37.** Das zweite Walzwerkzeug **55** formt dabei eine der axialen Rippen **44** um. Entsprechend ist die Zahl der zweiten Walzwerkzeuge **55** gleich der Zahl der der axialen Rippen **44.**

Der von dem zweiten Walzwerkzeug **55** abgedeckte Winkelabschnitt **15** kann in Umfangsrichtung **11** von den tiefsten Punkten **46** der Vertiefungen **30** aus den zwei bearbeiteten Reihen **43** begrenzt sein.

Die Walzwerkzeuge **55** haben eine Form analog einem schrägverzahnten Zahnrad mit mehreren Zähnen **56.** Eine Kopflinie **16** der Zähne **56** ist gegenüber der Drehachse **57** der Walzwerkzeuge **55** um einen ein Neigungswinkel **58** geneigt. Der Neigungswinkel **58** liegt zwischen 30 Grad und 60 Grad und ist entsprechend der gewünschten Wendelsteigung gewählt. Vorteilhafterweise stimmt der Neigungswinkel **58** der Wendelsteigung mit dem Neigungswinkel **53** der schrägen Rippen **52** auf weniger als 5 Grad überein, um Längungseffekte zu kompensieren.

Die Zähne **56** haben, abweichend von einer prismatischen Gestalt, eine kreisförmig konkav gekrümmte Kopflinie **16.** Die Krümmung ist etwa gleich der Krümmung des herzustellenden Wendelbodens **19.** Eine Höhe der Zähne **56** nimmt längs der Drehachse vom Rand zu der Mitte hin monoton ab und danach bis zum Rand monoton zu. Die Zähne **56** berühren vorzugsweise beim Walzen mit dem Rand der Kopflinie **16** die tiefsten Punkte **46** des Halblings **37** ohne diese umzuformen.

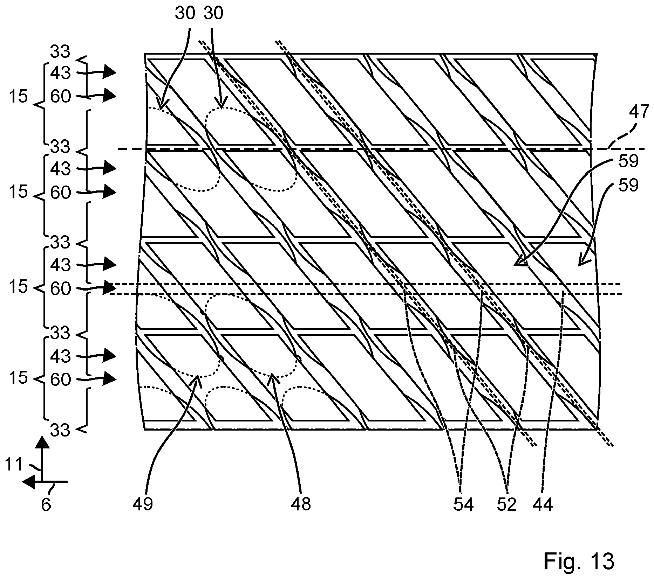

Fig. 13 zeigt schematisch abgerollt den von dem zweiten Gerüst überwalzten Halbling **37.** Die von dem ersten Gerüst eingewalzten Vertiefungen **30** definieren den Verlauf der axialen Rippen **44** und der schrägen Rippen **52.** Die zweiten Walzwerkzeuge **55** überwalzen die axialen Rippen **44** mit rautenförmigen Nuten **59.** Analog den Vertiefungen **30** sind die Nuten **59** in zu der Achse **2** parallelen Reihen **60** angeordnet, welche den jeweiligen Winkelabschnitten **15** entsprechen. Die Neigung **58** der Zähne **56** überträgt sich in die geneigte Rautenform der Nuten **59.**

Die Nuten **59** sind erstens in Umfangsrichtung **11** definiert positioniert, um die axialen Rippen **44** umzuformen. Zweitens sind die Nuten **59** längs der Achse **2** zwischen den schrägen Rippen **52** positioniert. Die axiale Rippe **44** wird somit im Wesentlichen nur zwischen ihren Kreuzungspunkten **54** mit den schrägen Rippen **52** umgeformt.

Die Nuten **59** sind längs der Achse **2** durch die zweiten Rippen **52** begrenzt und in Umfangsrichtung **11,** genauer in einer Richtung parallel zu den zweiten Rippen **52,** offen. Die Abmessung der Nut **59** ist entsprechend längs der Achse **2** gleich oder um bis zu 20 % geringer als die die axiale Abmessung der Vertiefung **30.** Die Abmessung der Nuten **59** in Umfangsrichtung **11** ist größer als der halbe Abmessung der Vertiefungen **30** in Umfangsrichtung **11.**

Die Oberfläche **42** der Nuten **59** ist parallel zu den schrägen Rippen **52** konkav, d.h. hat eine negative Krümmung. Die Nuten **59** haben vorzugsweise die Krümmung des Wendelbodens **19.** Der geringste Abstand **26** der Nuten **59** zu der Achse **28** weicht um weniger als 10 % von dem Abstand **21** des tiefsten Punkts **46** zu der Achse **28** ab.

Der Bohrkopf **3** ist vorzugsweise aus monolithisch aus einem Metallkarbid gefertigt. Eine Stirnseite der gefertigten Wendel **4** wird mit einem Sitz versehen, in den der Bohrkopf **3** eingesetzt und materialschlüssig verbunden wird. Der Sitz kann zu den Kanten komplementär ausgebildete Schlitze aufweisen, um den Bohrkopf **3** teilweise in die Wendel **4** formschlüssig einzusetzen. Alternativ kann der Bohrkopf **3** stumpf an die Wendel **4** angeschweißt oder hartgelötet sein.

Das dem Bohrkopf **3** gegenüberliegende Ende der Wendel **4** wird mit dem Einsteckende **5** versehen. Der Rohling **28** ist hierzu beispielsweise an einem für das Einsteckende **5** vorgesehenen Abschnitt in seiner ursprünglich zylindrischen Form belassen. Nuten für eine Drehmitnahme und eine Verriegelung werden in das Ende eingeformt oder gefräst. Das Einsteckende **5** kann auch separat hergestellt und mit der Wendel **4** verschweißt oder hartverlötet werden.

## Patentansprüche

1. Herstellungsverfahren für einen Wendelbohrer (1) mit den Schritten
Einwalzen einer Mehrzahl von Vertiefungen (30) in die Mantelfläche (16) eines Rohlings (28) zum Ausbilden eines Netzes aus Rippen (44, 52), wobei zueinander parallele erste Rippen (44) längs der Achse (2) des Rohlings (28) verlaufen und wobei zueinander parallele zweite Rippen (52) unter einem Neigungswinkel (58) schräg zu den ersten Rippen (44) verlaufen;
Einwalzen von Nuten (59) in Abschnitte der ersten Rippen (44), die zwischen benachbarten zweiten Rippen (52) liegen; wobei die Nuten (59) mit einer um weniger als 10 % von einer Tiefe der Vertiefungen (30) abweichenden Tiefe eingewalzt werden und wobei eine Abmessung der Nuten (59) längs der Achse (2) gleich oder um bis zu 20 % geringer als eine Abmessung der Vertiefungen (30) längs der Achse (2) ist, Bilden eines Bohrkopfs (3) an einer Stirnseite (61) des gewalzten Rohlings (28).

2. Herstellungsverfahren nach Anspruch 1, **dadurch gekennzeichnet, dass** die Vertiefungen (30) in zueinander parallelen und längs der Achse (2) orientieren Reihen (43) eingewalzt werden.

3. Herstellungsverfahren nach Anspruch 1 oder 2, **dadurch gekennzeichnet, dass** längs der Achse (2) benachbarte Vertiefungen (30) längs der Achse (2) überlappen.

4. Herstellungsverfahren nach einem der vorhergehenden Ansprüche, **dadurch gekennzeichnet, dass** in Umfangsrichtung (11) benachbarte Vertiefungen (30) in Umfangsrichtung (11) beabstandet sind.

5. Herstellungsverfahren nach einem der vorhergehenden Ansprüche, **dadurch gekennzeichnet, dass** eine Oberfläche (42) der Vertiefungen (48) entlang jeder Richtung konkav ist.

6. Herstellungsverfahren nach einem der vorhergehenden Ansprüche, **dadurch gekennzeichnet, dass** die Nuten (59) parallel zu den zweiten Rippen (52) verlaufen.

7. Herstellungsverfahren nach einem der vorhergehenden Ansprüche, **dadurch gekennzeichnet, dass** eine Oberfläche der Nuten (59) in einer Richtung parallel zu den zweiten Rippen (52) konvex ist.

8. Wendelbohrer (1) mit einem Bohrkopf (3), einer durchgehenden zwei, drei- bis sechsgängigen Wendel (4) und einem Einsteckende (5), welche aufeinanderfolgend auf einer Bohrerachse (2) angeordnet sind, **dadurch gekennzeichnet, dass** die Wendel (4) eine sich periodisch, zwei, drei- bis sechsmal pro Umlauf um die Bohrerachse (2) variierende radiale Außenabmessung (18) aufweist.

9. Wendelbohrer (1) nach Anspruch 8, **dadurch gekennzeichnet, dass** die Außenabmessung (18) um maximal 10 % variiert.

10. Wendelbohrer (1) nach Anspruch 8 oder 9, **dadurch gekennzeichnet, dass** die Außenabmessung (18) um mindestens 2 % variiert.

## Claims

1. Manufacturing method for a twist drill (1) with the steps
rolling of a plurality of indentations (30) into the casing surface (16) of a blank (28) so as to form a network of ribs (44, 52), wherein first ribs (44) run parallel to one another along the axis (2) of the blank (28), and wherein second ribs (52) run parallel to one another and at an inclination angle (58) obliquely to the first ribs (44);
rolling of grooves (59) into sections of the first ribs (44), which lie between adjacent second ribs (52); wherein the grooves (59) are rolled in to a depth which deviates by less than 10% from the depth of the indentations (30), and wherein the dimension of the grooves (59) along the axis (2) is equal to, or up to 20% less than, the dimension of the indentations (30) along the axis (2),
formation of a drill head (3) on a face side (61) of the rolled blank (28).

2. Manufacturing method according to claim 1, **characterized in that** the indentations (30) are rolled in rows (43) oriented parallel to one another and along the axis (2).

3. Manufacturing method according to claim 1 or 2, **characterized in that** indentations (30) which are adjacent along the axis (2) overlap along the axis (2).

4. Manufacturing method according to any one of the preceding claims, **characterized in that** indentations (30) adjacent in the circumferential direction (11) are spaced apart in the circumferential direction (11).

5. Manufacturing method according to any one of the preceding claims, **characterized in that** a surface (42) of the indentations (48) is concave along every direction.

6. Manufacturing method according to any one of the preceding claims, **characterized in that** the grooves (59) run parallel to the second ribs (52).

7. Manufacturing method according to any one of the preceding claims, **characterized in that** a surface of the grooves (59) is convex in a direction parallel to the second ribs (52).

8. Twist drill (1) with a drill head (3), a continuous spiral (4) of two, three, up to six threads, and an insertion end (5), which are arranged sequentially on a drill axis (2), **characterized in that** the spiral (4) exhibits a radial outer dimension (18) which varies periodically two, three, up to six times per revolution about the drill axis (2).

9. Twist drill (1) according to claim 8, **characterized in that** the outer dimension (18) varies by a maximum of 10%.

10. Twist drill (1) according to claim 8 or 9, **characterized in that** the outer dimension (18) varies by at least 2%.

## Revendications

1. Procédé de fabrication d'un foret hélicoïdal (1), comportant les étapes consistant à :
rouler une pluralité de creux (30) dans la surface extérieure (16) d'une ébauche (28) afin de former un réseau de nervures (44, 52), des premières nervures (44) parallèles les unes aux autres s'étendant le long de l'axe (2) de l'ébauche (28) et des secondes nervures (52) parallèles les unes aux autres s'étendant à un angle d'inclinaison (58) en biais par rapport aux premières nervures (44),
rouler des rainures (59) dans des parties des premières nervures (44) situées entre deux nervures (52) adjacentes, les rainures (59) étant roulées avec une profondeur s'écartant de moins de 10 % d'une profondeur des creux (30) et une dimension des rainures (59) le long de l'axe (2) étant égale ou jusqu'à 20 % inférieure à une dimension des creux (30) le long de l'axe (2),
former une tête de perçage (3) sur une face frontale (61) de l'ébauche roulée (28).

2. Procédé de fabrication selon la revendication 1, **caractérisé en ce que** les creux (30) sont roulés par séries (43) parallèles les unes aux autres et orientées le long de l'axe (2).

3. Procédé de fabrication selon la revendication 1 ou 2, **caractérisé en ce que** des creux (30) adjacents le long de l'axe (2) se chevauchent le long de l'axe (2).

4. Procédé de fabrication selon l'une des revendications précédentes, **caractérisé en ce que** des creux (30) adjacents dans une direction circonférentielle (11) sont espacés dans la direction circonférentielle (11).

5. Procédé de fabrication selon l'une des revendications précédentes, **caractérisé en ce qu'**une surface (42) des creux (48) est concave le long de chaque direction.

6. Procédé de fabrication selon l'une des revendications précédentes, **caractérisé en ce que** les rainures (59) s'étendent parallèlement aux secondes nervures (52) .

7. Procédé de fabrication selon l'une des revendications précédentes, **caractérisé en ce qu'**une surface des rainures (59) est convexe dans une direction parallèle aux secondes nervures (52).

8. Foret hélicoïdal (1) ayant une tête de perçage (3), une hélice continue (4) à deux, trois à six goujures et une extrémité d'insertion (5), qui sont agencés successivement sur un axe de foret (2), **caractérisé en ce que** l'hélice (4) a une dimension extérieure radiale (18) qui varie périodiquement de deux, trois à six fois par tour autour de l'axe de foret (2).

9. Foret hélicoïdal (1) selon la revendication 8, **caractérisé en ce que** la dimension extérieure (18) varie d'au plus 10 %.

10. Foret hélicoïdal (1) selon la revendication 8 ou 9, **caractérisé en ce que** la dimension extérieure (18) varie d'au moins 2 %.
